# FASCICULE DE BREVET EUROPEEN

(11) **EP 3 906 452 B1**
(45) Date de publication et mention de la délivrance du brevet: **01.03.2023**
(21) Numéro de dépôt: 20706558.2
(22) Date de dépôt: 06.01.2020
(51) Int. Cl.: G05D 1/02, B62B 5/00

(54) **SYSTÈME DE ROBOT-COMPAGNON COMPRENANT UN ENGIN A GUIDAGE AUTONOME**
BEGLEITROBOTER-SYSTEM MIT EINER AUTONOM GEFÜHRTEN MASCHINE
COMPANION ROBOT SYSTEM COMPRISING AN AUTONOMOUSLY GUIDED MACHINE

(30) Priorité: 04.01.2019 FR 1900086
(43) Date de publication de la demande: 10.11.2021
(73) Titulaire: BALYO, 94200 Ivry-sur-Seine (FR)
(72) Inventeur: VOISIN, Guillaume, 93160 NOISY-LE-GRAND (FR)
(74) Mandataire: IP Trust
(86) Numéro de dépôt international: PCT/FR2020/050009
(87) Numéro de publication internationale: WO 2020/141289

(56) Documents cités:
- WO-A1-2018/101962
- GB-A- 2 500 214
- US-A1- 2018 057 034
- US-A1- 2018 173 223
- US-A1- 2018 299 899

## Description

### Domaine de l'invention

La présente invention concerne de manière générale le domaine des robots compagnons destinés à des interactions et tâches plus autonomes avec l'homme et notamment le domaine des robots suiveurs (« follow me robot » en anglais).

Ces robots compagnons utilisent des fonctionnalités de capture de mouvement humain (ou HMC pour « Human Motion Capture ») pour la reconnaissance des mouvements d'un individu à partir des données fournies par un ou plusieurs capteurs. Cette reconstruction se focalise généralement sur la configuration 3D des articulations de la personne, mais peut parfois inclure l'apparence du sujet ou la forme de ses membres, notamment de ses jambes.

Le principe général de telles fonctionnalités est décrit par exemple dans la thèse de Brice Michoud « Reconstruction 3D à partir de séquences vidéo pour l'acquisition du mouvement de personnages en temps réel et sans marqueur » présentée et soutenue le 30 Septembre 2009 à l'Université Claude Bernard de Lyon.

### État de la technique

On connaît dans l'état de la technique différentes solutions de robot suiveur.

La demande de brevet US20180057034A1 décrit un dispositif pour contrôler un véhicule par un procédé comprenant la surveillance de l'entrée reçue d'un ou de plusieurs capteurs de proximité, l'approximation des positions latérale et longitudinale d'un utilisateur derrière le véhicule sur la base de la surveillance, et la commande du véhicule sur la base des positions approximative latérale et longitudinale de l'utilisateur par rapport au véhicule pour continuer à recentrer le véhicule par rapport à l'utilisateur.

Le véhicule prévoit un premier et un deuxième capteur de proximité; et dans lequel l'approximation d'une position latérale de l'utilisateur est exécutée par l'établissement d'une première zone associée au premier capteur, d'une seconde zone associée au deuxième capteur, dans laquelle la première zone et la deuxième zone se chevauchent en partie, et l'approximation de la position latérale de l'utilisateur sur la base de la présence et / ou de l'absence détectée par l'utilisateur des première et seconde zones.

On connaît aussi la demande de brevet WO2018101962A1 décrivant un bagage qui comprend une unité d'entraînement, un contrôleur et des capteurs pour détecter la proximité d'un utilisateur et pour effectuer la détection d'obstacles. Les capteurs détectent la proximité de l'utilisateur et parcourent une trajectoire suivant l'utilisateur. En réponse à la détection d'un mouvement en dehors d'une plage prescrite par l'utilisateur, une alerte peut être générée. De même, si le mouvement du conteneur de stockage ne correspond pas aux instructions d'un contrôleur, une alerte peut également être générée. Le contrôleur du conteneur de stockage peut se connecter à un contrôleur d'un véhicule, qui peut fournir un emplacement cible au conteneur de stockage et peut également transmettre des emplacements d'obstacles au conteneur de stockage.

On connaît aussi la demande de brevet US2018/173223 décrivant un chariot de golf robotique autonome qui est capable de suivre un récepteur portable à une distance prédéterminée, et qui est capable de détecter une collision imminente potentielle avec un objet sur son chemin et de s'arrêter avant ladite collision imminente potentielle.

La demande de brevet US2018/299899 décrit des procédés et un appareil permettant d'utiliser efficacement la force du signal et d'autres données d'un robot pour optimiser son fonctionnement. Dans un mode de réalisation, le robot de nettoyage peut interagir avec d'autres contrôleurs domestiques sur un réseau pour optimiser le fonctionnement du robot de nettoyage. Dans un mode de réalisation, le robot de nettoyage mesure une variété de données lors de son déplacement dans un espace et génère une carte (par exemple, une carte thermique). Les données sont fournies dans différentes couches pour un affichage et une sélection facile par un utilisateur. Dans un mode de réalisation, le robot de nettoyage peut agir comme un hub pour communiquer avec d'autres contrôleurs domestiques et coordonner des actions.

### Inconvénients de l'art antérieur

Les solutions de l'art antérieur présentent des risques de « décrochage » fréquent, lors du masquage inopiné de l'opérateur, par exemple lors des déplacements dans une foule ou dans un environnement encombré.

Dans ce cas, le robot compagnon perd tout référentiel de suivi et est commandé pour se mettre en situation de sécurité, généralement un arrêt d'urgence.

La solution proposée par la demande de brevet US20180057034A1 prévoit une télécommande utilisée par l'opérateur pour envoyer des instructions de déplacement à droite ou à gauche du robot suiveur par inclinaison de la télécommande. Cette solution est particulièrement inappropriée car elle est antinomique avec un robot-suiveur autonome et automatique.

### Solution apportée par l'invention

La présente invention vise à remédier à ces inconvénients en proposant une solution robuste et ergonomique pour l'opérateur à suivre, en lui évitant toute intervention humaine tout en assurant un mode de fonctionnement pérenne y compris en cas de masquage transitoire de l'acquisition de l'image de l'opérateur à suivre. Le but est aussi de permettre au robot de retrouver une situation lui permettant de retrouver un mode d'acquisition de l'image de l'opérateur à suivre.

A cet effet, l'invention concerne selon son acception la plus générale un système de robot-compagnon présentant les caractéristiques énoncées dans la revendication 1.

Le boîtier n'est pas destiné à former une interface homme machine pour l'activation par l'opérateur d'une commande de déplacement.

De préférence, la communication entre lesdits modules de communication fonctionne selon le mode « Ad hoc ».

Avantageusement, la communication entre lesdits modules de communication est de type « Wifi ».

Selon une variante préférée, ledit module de communication de l'engin à guidage autonome est constitué par un routeur Wifi multi-bande commandé par un moyen de mesure de la qualité de service pour la sélection de la fréquence de communication avec le boîtier de détection des mouvements de l'opérateur.

L'invention concerne aussi un procédé de commande du déplacement d'un engin à guidage autonome faisant partie d'un système de robot-compagnon conforme à l'invention caractérisé en ce qu'il exploite les données d'analyse des images des jambes de l'opérateur à suivre et en cas de disparition de ces données, en ce qu'il exploite les informations de la centrale inertielle du boîtier de détection des mouvements de l'opérateur.

De préférence, le calculateur enregistre la position et la vitesse instantanée déterminée à partir des données transmises par la centrale inertielle à chaque balayage dudit moyen d'imagerie.

Avantageusement, le procédé comporte une étape d'estimation de la position de l'opérateur à suivre à partir des données transmises par la centrale inertielle, pour piloter la zone d'exploration du moyen d'imagerie.

### Description détaillée d'un exemple non limitatif de l'invention

La présente invention sera mieux comprise à la lecture de la description détaillée d'un exemple non limitatif de l'invention qui suit, se référant aux dessins annexés où :

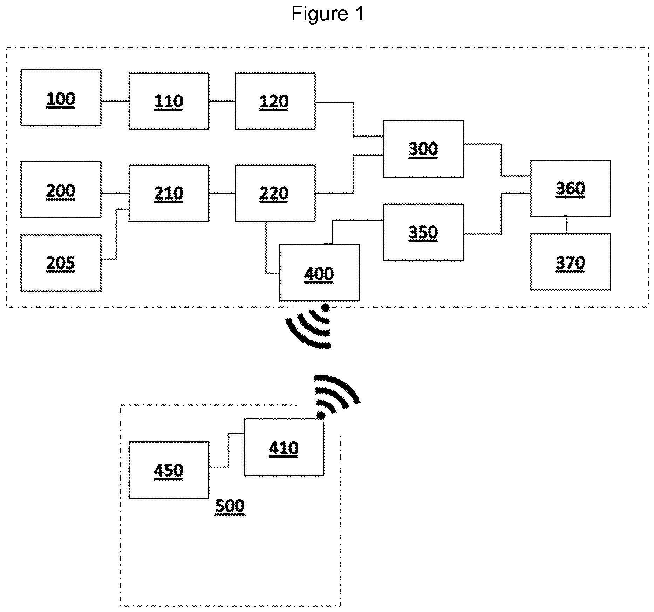

- la figure 1 représente une vue de l'architecture fonctionnelle de l'invention.

### Architecture fonctionnelle

Le système décrit à titre d'exemple comprend un robot compagnon et un boîtier d'acquisition des mouvements de l'opérateur destiné à être porté par l'opérateur à suivre.

Le robot compagnon est un équipement motorisé autonome équipé d'une caméra ou d'un lidar (100) pour l'acquisition d'une image de l'environnement du robot.

L'angle de prise de vue est dirigé vers l'avant lors de la réception d'une instruction de démarrage de suivi par un utilisateur. L'identification de l'opérateur à suivre peut être automatisée par un module (110) de reconnaissance d'image. Lorsque le robot est implémenté pour reconnaître l'instruction de début de suivi en utilisant une voix humaine ou un geste, la voix humaine reconnue ou le geste est utilisé pour calculer une distance entre l'utilisateur et le système électronique mobile et la distance calculée, et ajuster l'angle de prise de vue.

Cette caméra ou ce lidar (100) fournit des images à un module de traitement (110) procédant de manière connue au filtrage de l'image et à l'extraction des informations telles que les éléments fixes de l'environnement, telles que les obstacles et infrastructures, ainsi qu'une représentation globale de l'opérateur. Un module de traitement (120) détermine la position de l'opérateur dans le référentiel du robot.

Un deuxième moyen d'imagerie utilisant par exemple une deuxième caméra (200) associée à un laser à balayage (205) fournit une deuxième information télémétrique correspondant aux jambes de l'opérateur à suivre. Un module de traitement (210) extrait les informations représentatives des jambes et un module (220) calcule la position des jambes dans le référentiel du robot. Les traitements de reconnaissance des jambes sont par exemple ceux décrits dans les articles mentionnés dans la présentation de l'état de la technique.

Un module de sélection d'objet suivi (300) détermine les valeurs de coordonnées bidimensionnelles fournies par le détecteur de personnes (120) et le détecteur de jambe (220).

Ces données sont transmises à un module (300) déterminant la position cible à atteindre.

Un calculateur (360) calcule les instructions de pilotage de la trajectoire du robot et les transmet à un module de puissance (370) commandant les moteurs du robot. En cas d'indisponibilité ou d'incohérence, le calculateur (360) reçoit les données provenant d'un module (350) recevant les informations d'un module de communication (400) Wifi.

Ce module Wifi (400) reçoit des informations des modules d'analyse de la position de l'opérateur.

Il constitue un routeur pour l'établissement d'une session Wifi autonome avec le module de communication (410) d'un boîtier (500) porté par l'opérateur. La communication entre les équipements est de type réseau mobile ad-hoc sans infrastructure. Ce mode permet de connecter directement les équipements munis d'une carte Wi-Fi, sans utiliser un matériel tiers tel qu'un point d'accès pour interconnecter le robot et le boîtier (500) sans matériel supplémentaire.

Lors de l'initialisation du robot et de son boîtier (500) associé, les deux cartes (400, 410) sont configurées en mode « Ad hoc » au lieu du mode « Infrastructure », avec la sélection d'un canal par défaut, d'un nom de réseau (SSID) communs à tous et optionnellement d'une clé de chiffrement.

Ce boîtier (500) intègre une centrale inertielle (450) détectant les mouvements de l'opérateur et fournissant au robot des informations relatives aux déplacements de l'opérateur. Le boîtier ne comporte aucune interface hommemachine destinée à l'envoi d'instructions par l'opérateur, par l'actionnement d'un écran tactile, par un clavier, par des boutons de commandes ou encore par l'exploitation des signaux délivrés par la centrale inertielle pour commander un changement de direction par l'inclinaison dans un sens ou dans l'autre du boîtier. Le boîtier est porté par l'opérateur, par exemple à sa ceinture ou dans une de ses poches, pour acquérir les mouvements naturels de l'opérateur pendant son déplacement.

Le routeur (400) sélectionne la fréquence de transmission en fonction de la qualité du signal, et modifie la fréquence pour maximiser la qualité de la communication entre le boîtier (500) et le robot.

## Revendications

1. - Système de robot-compagnon comprenant un engin à guidage autonome comportant un moyen d'imagerie (100) et un calculateur (360) commandé par un programme de traitement des images acquises par ledit moyen d'imagerie (100), l'angle de prise de vue dudit moyen d'imagerie (100) étant dirigé vers l'avant dudit engin à guidage autonome, et ledit moyen d'imagerie (100) fournissant des images à un module de traitement (110) du système procédant à l'extraction des informations comprenant les éléments fixes de l'environnement, ainsi qu'une représentation globale d'un opérateur à suivre , un autre module de traitement (120) du système déterminant la position de l'opérateur dans le référentiel de l'engin à guidage autonome
- ledit système comportant un deuxième moyen d'imagerie pour fournir une deuxième information télémétrique correspondant aux jambes de l'opérateur à suivre, grâce à un module de traitement (210) du système qui extrait les informations représentatives des jambes et à un module (220) du système calculant la position des jambes dans le référentiel du robot,
- ledit système comportant en outre un boîtier (500) porté par l'opérateur, intégrant une centrale inertielle (450) détectant les mouvements de l'opérateur à suivre et fournissant des informations relatives aux déplacements de l'opérateur à suivre par l'intermédiaire d'un module de communication (410) du boîtier (500) à un module de communication (400) de l'engin à guidage autonome,
- **caractérisé en ce que**:
ledit calculateur (360) étant commandé pour calculer les instructions de pilotage de la trajectoire de l'engin à guidage autonome à partir des données d'analyse des images des jambes et pour calculer les instructions de pilotage de la trajectoire de l'engin à guidage autonome à partir de données reçues d'un module (350) recevant les informations dudit module de communication (400) de l'engin à guidage autonome en cas de disparition des données d'analyse des images des jambes,
ledit calculateur (360) étant en outre commandé pour transmettre les instructions de pilotage à un module de puissance (370) commandant les moteurs de l'engin à guidage autonome.

2. - Système de robot-compagnon selon la revendication 1 **caractérisé en ce que** la communication entre ledit module de communication (400) dudit engin à guidage autonome fonctionne avec le module de communication (410) dudit boîtier (500) selon le mode « Ad hoc ».

3. - Système de robot-compagnon selon la revendication 1 **caractérisé en ce que** la communication entre lesdits modules de communication (400, 410) est de type « Wifi ».

4. - Système de robot-compagnon selon la revendication 1 **caractérisé en ce que** ledit module de communication de l'engin à guidage autonome est constitué par un routeur Wifi multi-bande commandé par un moyen de mesure de la qualité de service pour la sélection de la fréquence de communication avec ledit boîtier (500) de détection des mouvements de l'opérateur.

5. - Procédé de commande du déplacement d'un engin à guidage autonome faisant partie d'un système de robot-compagnon conforme à la revendication 1 **caractérisé en ce qu'**il exploite les données d'analyse des images des jambes de l'opérateur à suivre et en cas de disparition de ces données, **en ce qu'**il exploite les informations de la centrale inertielle du boîtier (500) de détection des mouvements de l'opérateur.

6. - Procédé de commande du déplacement d'un engin à guidage autonome selon la revendication 5 **caractérisé en ce que** ledit moyen d'imagerie (200) est un moyen d'imagerie à balayage et **en ce que** le calculateur enregistre la position et la vitesse instantanée déterminée à partir des données transmises par la centrale inertielle à chaque balayage dudit moyen d'imagerie.

7. - Procédé de commande du déplacement d'un engin à guidage autonome selon la revendication 5 **caractérisé en ce qu'**il comporte une étape d'estimation de la position de l'opérateur à suivre à partir des données transmises par la centrale inertielle, pour piloter la zone d'exploration du moyen d'imagerie.

## Patentansprüche

1. Begleitrobotersystem, umfassend eine autonom geführte Maschine, die ein Abbildungsmittel (100) und einen Computer (360) aufweist, der durch ein Programm zum Verarbeiten von Bildern gesteuert wird, die durch das Abbildungsmittel (100) erfasst werden, wobei der Aufnahmewinkel des Abbildungsmittels (100) in Richtung der Vorderseite der autonom geführten Maschine gerichtet ist, und das Abbildungsmittel (100) Bilder an ein Verarbeitungsmodul (110) des Systems bereitstellt, das die Extraktion von Informationen, umfassend die festen Elemente der Umgebung, sowie eine Gesamtdarstellung eines zu verfolgenden Bedieners durchführt, wobei ein weiteres Verarbeitungsmodul (120) des Systems die Position des Bedieners in dem Bezugssystem der autonom geführten Maschine bestimmt
- wobei das System ein zweites Abbildungsmittel zum Bereitstellen von zweiten telemetrischen Informationen, die den Beinen des zu verfolgenden Bedieners entsprechen, mithilfe eines Verarbeitungsmoduls (210) des Systems, das die Informationen extrahiert, die Beine darstellen, und eines Moduls (220) des Systems, das die Position der Beine in dem Bezugssystem des Roboters berechnet, aufweist,
- wobei das System ferner ein Gehäuse (500) aufweist, das durch den Bediener getragen wird, das eine Trägheitsmesseinheit (450) integriert, die die Bewegungen des zu verfolgenden Bedieners erkennt und Informationen bezüglich der Verschiebungen des zu verfolgenden Bedieners mittels eines Kommunikationsmoduls (410) des Gehäuses (500) einem Kommunikationsmodul (400) der autonom geführten Maschine bereitstellt,
- **dadurch gekennzeichnet, dass:**
der Computer (360) zum Berechnen der Lenkanweisungen der Bahn der autonom geführten Maschine aus den Daten der Bildanalyse der Beine und zum Berechnen der Lenkanweisungen der Bahn der autonom geführten Maschine aus Daten gesteuert wird, die von einem Modul (350) empfangen werden, das die Informationen von dem Kommunikationsmodul (400) der autonom geführten Maschine bei Verlust der Daten der Bildanalyse der Beine empfängt,
- der Computer (360) ferner zum Übertragen der Lenkanweisungen an ein Leistungsmodul (370) gesteuert wird, das die Motoren der autonom geführten Maschine steuert.

2. Begleitrobotersystem nach Anspruch 1, **dadurch gekennzeichnet, dass** die Kommunikation zwischen dem Kommunikationsmodul (400) der autonom geführten Maschine mit dem Kommunikationsmodul (410) des Gehäuses (500) gemäß dem "Ad-hoc"-Modus läuft.

3. Begleitrobotersystem nach Anspruch 1, **dadurch gekennzeichnet, dass** die Kommunikation zwischen den Kommunikationsmodulen (400, 410) einer "WLAN"-Art ist.

4. Begleitrobotersystem nach Anspruch 1, **dadurch gekennzeichnet, dass** das Kommunikationsmodul der autonom geführten Maschine aus einem Multiband-WLAN-Router besteht, der durch ein Mittel zum Messen der Dienstqualität für die Auswahl der Kommunikationsfrequenz mit dem Gehäuse (500) zum Erkennen der Bewegungen des Bedieners gesteuert wird.

5. Verfahren zum Steuern der Verschiebung einer autonom geführten Maschine, die Teil eines Begleitrobotersystems nach Anspruch 1 ist, **dadurch gekennzeichnet, dass** es die Daten der Bildanalyse der Beine des zu verfolgenden Bedieners auswertet, und bei Verlust dieser Daten, dass es die Informationen der Trägheitsmesseinheit des Gehäuses (500) zum Erkennen der Bewegungen des Bedieners auswertet.

6. Verfahren zum Steuern der Verschiebung einer autonom geführten Maschine nach Anspruch 5, **dadurch gekennzeichnet, dass** das Abbildungsmittel (200) ein Abtastabbildungsmittel ist und dass der Computer die Position und die momentane Geschwindigkeit aufzeichnet, die aus den Daten bestimmt wird, die durch die Trägheitsmesseinheit bei jeder Abtastung der Abbildungseinrichtung übertragen werden.

7. Verfahren zum Steuern der Verschiebung einer autonom geführten Maschine nach Anspruch 5, **dadurch gekennzeichnet, dass** es einen Schritt zum Schätzen der Position des zu verfolgenden Bedieners aus Daten, die durch die Trägheitsmesseinheit übertragen werden, zum Lenken des Auswertungsbereichs der Abbildungsmittel aufweist.

## Claims

1. Companion robot system comprising an autonomously guided machine comprising imaging means (100) and a computer (360) controlled by a program for processing the images acquired by said imaging means (100), the angle of view of said imaging means (100) being directed towards the front of said self-guided craft, and said imaging means (100) supplying images to a processing module (110) of the system performing the extraction of information comprising the fixed elements of the environment, as well as an overall representation of an operator to be followed, another processing module (120) of the system determining the position of the operator in the reference frame of the autonomously guided vehicle
- said system comprising a second imaging means for supplying a second telemetric information corresponding to the legs of the operator to be followed, thanks to a processing module (210) of the system which extracts the information representative of the legs and to a module (220) the system calculating the position of the legs in the robot's reference frame,
- said system further comprising a box (500) worn by the operator, integrating an inertial unit (450) detecting the movements of the operator to be followed and providing information relating to the movements of the operator to be followed by means of a communication module (410) of the box (500) to a communication module (400) of the self-guided vehicle,
- **characterized in that**:
said computer (360) being controlled to calculate guidance craft trajectory steering instructions from the leg image analysis data and to calculate guidance craft trajectory steering instructions autonomous from data received from a module (350) receiving the information from said communication module (400) of the autonomously guided machine in the event of disappearance of the analysis data of the images of the legs,
- said computer (360) being further controlled to transmit the piloting instructions to a power module (370) controlling the motors of the autonomously guided vehicle.

2. Companion robot system according to claim 1, **characterized in that** the communication between the said communication module (400) of the said autonomously guided vehicle operates with the communication module (410) of the said box (500) according to the "Ad hoc" mode.

3. Companion robot system according to claim 1, **characterized in that** the communication between the said communication modules (400, 410) is of the "Wifi" type.

4. Companion robot system according to claim 1, **characterized in that** the said communication module of the self-guided vehicle consists of a multi-band Wifi router controlled by a means of measuring the quality of service for the selection of the frequency communication with said box (500) for detecting the movements of the operator.

5. Method for controlling the movement of an autonomously guided machine forming part of a companion robot system according to claim 1, **characterized in that** it uses the analysis data of the images of the legs of the operator to be followed and in the event of disappearance of these data, **in that** it uses the information from the inertial unit of the box (500) for detecting the movements of the operator.

6. Method for controlling the movement of an autonomously guided machine according to claim 5, **characterized in that** the said imaging means (200) is a scanning imaging means and **in that** the computer records the position and the instantaneous speed determined from the data transmitted by the inertial unit at each scan of said imaging means.

7. Method for controlling the movement of an autonomously guided machine according to claim 5, **characterized in that** it comprises a step of estimating the position of the operator to be followed from the data transmitted by the inertial unit, to control the exploration zone of the imaging means.
